# EUROPÄISCHE PATENTSCHRIFT

(11) **EP 3 118 504 B1**
(45) Veröffentlichungstag und Bekanntmachung des Hinweises auf die Patenterteilung: **28.11.2018**
(21) Anmeldenummer: 16001387.6
(22) Anmeldetag: 20.06.2016
(51) Int. Cl.: F16L 27/10, F01N 13/18, F16J 3/04, F16L 27/11, F16L 51/02, F16L 11/15

(54) **KOMPENSATOR, INSBESONDERE FÜR KFZ-ANWENDUNGEN**
COMPENSATOR, IN PARTICULAR FOR MOTOR VEHICLE APPLICATIONS
COMPENSATEUR, EN PARTICULIER POUR APPLICATIONS SUR VEHICULES AUTOMOBILES

(30) Priorität: 17.07.2015 DE 102015009246
(43) Veröffentlichungstag der Anmeldung: 18.01.2017
(73) Patentinhaber: MAN Truck & Bus AG, 80995 München (DE)
(72) Erfinder: Schibalsky, Walter, 90455 Nürnberg (DE); Bucher, Simon, 91717 Wassertrüdingen (DE)
(74) Vertreter: v. Bezold & Partner Patentanwälte - PartG mbB

(56) Entgegenhaltungen:
- DE-A1-102011 087 960
- DE-A1-102013 200 579
- DE-B3-102010 027 570
- DE-U1- 29 614 098

## Beschreibung

Die vorliegende Erfindung betrifft einen Kompensator zum Kompensieren von Relativbewegungen zweier Leitungselemente zueinander, insbesondere als flexibles Leitungselement für Kfz-Anwendungen, umfassend einen mehrlagigen Balg, der als Wandung mindestens zwei aufeinandersitzende Lagen umfasst, zwischen denen jeweils ein Zwischenraum gebildet ist.

Insbesondere in Kraftfahrzeugen mit Verbrennungsmotor, jedoch auch bei Verbrennungsmotoren im Allgemeinen, stationären und mobilen Turbomaschinenmotoren, aber auch in industriellen Anlagen und chemischen Reaktoren, treten während des Betriebs Schwingungen und Relativbewegungen auf, die sich auch auf Rohrleitungen übertragen können. Diese werden beispielsweise induziert durch oszillierende Massen, Unwucht von rotierenden Bauteilen und durch Trägheitsmomente bei Laständerungen des Motors. Zum Ausgleich von Bewegungen in Rohrleitungen, insbesondere aufgrund der vorgenannten Schwingungen oder Relativbewegungen, bei thermischen Längenänderungen etc. sind aus dem Stand der Technik sog. Kompensatoren bekannt, die als flexibles Leitungselement zum Einsatz kommen. Die Kompensation erfolgt dabei mechanisch über einen elastischen Balg des Kompensators, der insbesondere als mehrlagiger Balg ausgeführt sein kann.

Im Automobilbau werden beispielsweise im Abgasstrang mehrlagige Metallbalgkompensatoren eingesetzt, auch als Abgaskompensatoren bezeichnet, anhand derer heiße Verbrennungsgase vom Motor in die Abgasanlage geleitet werden. Derartige Kompensatoren bestehen üblicherweise aus einer Mehrzahl von aufeinandersitzenden, ringgewellten Balglagen, die mit den Abgasleitungsrohren gasdicht verschweißt sind.

Allgemein unterliegen Kompensatoren, insbesondere die vorgestellten mehrlagigen, metallenen Abgaskompensatoren, einer hohen Verschleißanfälligkeit. Verschleiß tritt beispielsweise als Rissbildung in den Balglagen auf, wodurch der Betrieb des Kompensators und somit die Funktion des gesamten Abgasstrangs stark beeinträchtigt wird. Eine übliche Maßnahme zur Minimierung der Verschleißanfälligkeit liegt in der Verwendung von höherwertigen Stählen für die Lagen des Balgs, insbesondere Nickelbasislegierungen mit hohen Temperatur- und Korrosionsbeständigkeiten.

In der Offenlegungsschrift DE 10 2008 017 599 A1 wird ein mehrlagiger Metallbalg vorgeschlagen, der mittels einer speziellen Zwischenlage Diffusionsverschweißungen zwischen den einzelnen Lagen mehrlagiger Bälge beim Einwirken hoher Temperaturen zu verhindern sucht, um eine Konstanz der Funktionseigenschaften des Balgs zu gewährleisten und Ausfällen entgegenzuwirken. Dennoch ist zu erwarten, dass mit Hilfe des besagten Abgaskompensators noch keine ausreichende Verschleißreduktion erreicht werden kann, da neben Diffusionsverschweißungen häufig weitere Versagensarten auftreten können.

Aus den Entgegenhaltungen DE 10 2010 027 570 B3, DE 10 2011 087 960 A1, DE 296 14 098 U1 und DE 10 2013 200 579 A1 sind Kompensatoren und flexible Metallelemente bekannt, bei denen ein Reibminderer zwischen einzelne Lagen des flexiblen Leitungsabschnitts eingebracht ist. Es ist somit eine Aufgabe der Erfindung, einen verbesserten Kompensator bereitzustellen, mit dem Nachteile herkömmlicher Kompensatoren vermieden werden können. Es ist insbesondere eine Aufgabe der Erfindung, einen verbesserten Kompensator mit einer deutlich reduzierten Verschleißanfälligkeit und damit einer verbesserten Lebensdauer bereitzustellen.

Die Erfindung löst die Aufgaben durch einen Kompensator mit den Merkmalen des Patentanspruchs 1. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Im Rahmen der Erfindung durchgeführte Untersuchungen der Rissursache von Abgaskompensatoren, insbesondere der Risse im Balg, haben ergeben, dass diese durch reibende Relativbewegungen der Kompensatorlagen, d. h. der Lagen des Balgs, zueinander entstehen. Die Risse können insbesondere durch Mikrobewegungen zwischen zwei in Kontakt stehenden, aneinander reibenden Kompensatorlagen, die zu einer erheblichen Oberflächenschädigung führen, entstehen. Bei längeren Betriebszeiten können die Mikrobewegungen zu Schwingbruchanrissen sowie Dauerschwingbrüchen in den Kompensatorlagen führen.

Zur Vermeidung derartiger reibbedingter Risse in den Kompensatorlagen umfasst die Erfindung die allgemeine technische Lehre, zwischen die Lagen des Kompensators einen Reibminderer einzubringen, wodurch die Reibung zwischen zwei Lagen reduziert wird.

Gemäß allgemeinen Gesichtspunkten der Erfindung wird somit ein Kompensator zum Kompensieren von Relativbewegungen zweier Leitungselemente zueinander, insbesondere als flexibles Leitungselement für Kfz-Anwendungen, bereitgestellt. Der Kompensator umfasst einen mehrlagigen Balg, der als Wandung mindestens zwei aufeinandersitzende Lagen umfasst, zwischen denen jeweils ein Zwischenraum gebildet ist.

Der erfindungsgemäße Kompensator zeichnet sich dadurch aus, dass in mindestens einem Zwischenraum zwischen zwei Lagen ein Reibminderer vorhanden ist. Ein zwischen zwei Lagen vorhandener Reibminderer verringert die Reibung zwischen den Lagen, d. h., die Reibung zwischen den Lagen ist ohne eingebrachten Reibminderer größer als mit eingebrachtem Reibminderer. Mit Hilfe des Reibminderers wird somit eine Reibkraft, die durch eine Bewegung zweier aufeinander sitzender Lagen relativ zueinander erzeugt wird, verringert. Der Reibminderer bildet im Zwischenraum zwischen zwei Balglagen eine Oberfläche mit reibkraftreduzierten Eigenschaften aus. Der Reibminderer kann eine reibmindernde Zwischenschicht bzw. Zwischenlage, z. B. eine Gleitschicht, oder eine reibmindernde Beschichtung oder Lackierung sein.
Gemäß einer bevorzugten ersten Ausführungsform ist der Reibminderer eine reibmindernde Beschichtung und/oder eine reibmindernde Lackierung, die auf zumindest einer der beiden an den jeweiligen Zwischenraum angrenzenden Lagen an ihrer dem Zwischenraum zugewandten Seite aufgebracht ist. Diese Ausführungsform bietet sich insbesondere dann an, wenn die Herstellung des erfindungsgemäßen Kompensators ohne Hinzufügen von weiteren Bauteilen in ein bereits bestehendes Herstellungsverfahren integriert werden soll, da das Einbringen der reibungsmindernden Zwischenschicht beispielsweise durch vorheriges Beschichten oder Lackieren der Rohre mit reibungsmindernden Bestandteilen erfolgen kann, d. h. vor dem Ineinanderschieben und Umformen der Rohre zu einem wellenförmigen Balg. In einer vorteilhaften Variante der ersten Ausführungsform kann die reibmindernde Beschichtung und/oder Lackierung ein Gleitlack sein. Mittels einer Verwendung von Gleitlacken auf der betreffenden Oberfläche kann eine dauerhafte Beschichtung der betreffenden Oberfläche erreicht werden, ohne dass Verklumpungen oder Verharzungen in den Lagen des Metallbalgs auftreten.
Erfindungsgemäß ist der Reibminderer eine Beschichtung auf Festschmierstoffbasis. Vorteilhaft bei der Verwendung von Festschmierstoffen sind die hohe Temperaturbeständigkeit und die geringe Fließeigenschaft. Die erfindungsgemäße Beschichtung auf Festschmierstoffbasis ist Molybdän(IV)-sulfid (MoS2). Eine nicht- erfindungsgemäße Beschichtung auf Festschmierstoffbasis ist Chrom(III)-nitrid (CrN).

In einer nicht erfindungsgemäßen Ausführungsform ist der Reibminderer als eine Zwischenlage aus einem reibungsreduzierenden Feststoff ausgeführt. Die Zwischenlage kann beispielsweise als Zwischenrohr ausgeführt sein. Diese Ausführungsform ist insbesondere dann vorteilhaft, wenn die Lagen des Balgs aufgrund definierter Funktionseigenschaften nicht beschichtet und/oder lackiert werden sollen.

In einer nicht erfindungsgemäßen Ausführungsform ist die Zwischenlage eine graphitische Zwischenlage, insbesondere aus gebundenem Graphit. Vorteilhaft bei der Verwendung von Graphit oder Graphitfasern sind die extrem hohe Temperaturbeständigkeit sowie hohe Elastizitätsmodule, Dehnbarkeiten bzw. Zugfestigkeiten.
Ein Schritt in der Herstellung eines Kompensators besteht üblicherweise aus dem Aufweiten von übereinandergeschobenen Rohren, wobei jedes Rohr im fertigen Zustand eine Wellenlage darstellt. Das Einbringen der Zwischenlage erfolgt im Fertigungsprozess. Beispielsweise kann das reibmindernde Zwischenrohr vor dem Schritt des Aufweitens zwischen zwei Metallrohre des Balgs geschoben werden.
Der Reibminderer kann in jeden Zwischenraum zwischen zwei aufeinandersitzenden Lagen eingebracht werden oder auch nur in einzelne Zwischenräume. Ferner kann der Reibminderer sich in Axialrichtung vorzugsweise über die gesamte Länge des Balgs erstrecken, so dass die Reibkräfte entlang der gesamten axialen Länge des Balgs reduziert werden können.
Der Reibminderer kann jedoch auch nur in Teilabschnitten des Zwischenraums angeordnet sein. Denkbar ist beispielsweise das gezielte Aufbringen einer Beschichtung und/oder Lackierung und/oder einer Zwischenlage an definierten Druckpunkten des Zwischenraums des Balgs. Vorteilhaft ist hier die Möglichkeit der Reduzierung des Reibminderers auf definierte Stellen im Balg. Dadurch kann eine kosten- und gewichtsoptimierte Konstruktion des Kompensators erreicht werden.
Die Wandung des Balgs kann in an sich bekannter Weise zumindest teilweise wellenförmig ausgebildet sein. Die mindestens zwei aufeinandersitzenden Lagen können jeweils Metalllagen sein. Ein solcher Kompensator wird auch als Metallkompensator bezeichnet. Durch die beschriebene mehrlagige Ausführung des Balgs und durch die wellenförmige Wandung des Balgs werden Relativbewegungen ausgeglichen, ohne dass unterschiedliche Werkstoffe zum Einsatz kommen.
Der Kompensator kann ferner ein Abgaskompensator sein, d. h. ein Kompensator, der in einem Abgasstrang eines Kraftfahrzeugs eingesetzt wird. Der Kompensator kann jedoch auch als flexibles Leitungselement für weitere Anwendungen eingesetzt werden, insbesondere als Kompensator in industrielle Anlagen, Kraftmaschinen im Allgemeinen sowie chemische Reaktoren. Die Erfindung betrifft ferner ein Kraftfahrzeug, insbesondere Nutzfahrzeug, aufweisend einen in einer Abgasleitung angeordneten Kompensator nach einem der vorhergehenden Ansprüche.
Die zuvor beschriebenen bevorzugen Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Querschnittsansicht eines Kompensators
- Figur 2A, 2B und 2C: eine vergrößerte Detailansicht eines Kompensators gemäß der Erfindung.

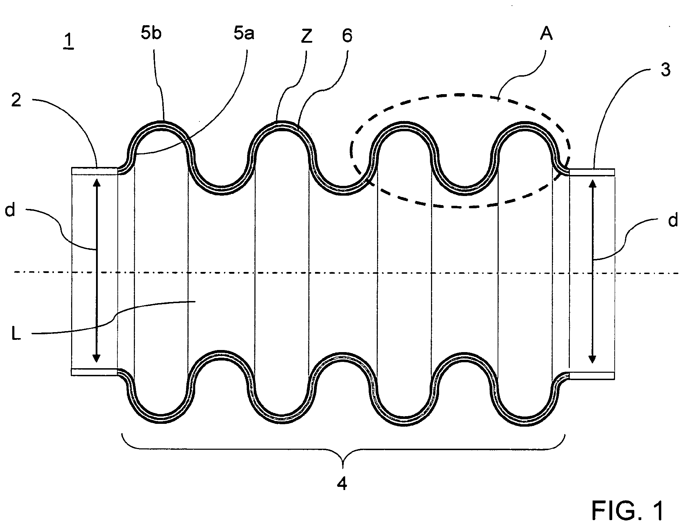

In Figur 1 ist eine schematische Querschnittsansicht eines Kompensators 1 dargestellt, der beispielsweise als Abgaskompensator in einer Abgasrückführungsleitung verwendet werden kann. Der Kompensator 1 umfasst einen wellenförmigen bzw. ringgewellten Metallbalg 4. Der Kompensator umfasst ferner zwei Rohrleitungsanschlüsse 2 und 3 zur Ausbildung von Flanschverbindungen, über die der Kompensator 1 in eine Rohrleitung, z. B. eine Abgasrückführungsleitung (nicht dargestellt), eingebaut wird.
Der Balg 4 umfasst in der gezeigten Ausführungsform eine innere Metalllage 5a und eine äußere Metalllage 5b, die zusammen die wellenförmige Wandung des Metallbalgs 4 bilden. Zwischen der inneren Metalllage 5a und der äußeren Metalllage 5b bildet sich ein Zwischenraum Z aus, in den ein Reibminderer in Form einer durchgängigen Zwischenlage 6 aus einem reibungsreduzierenden Feststoff, die sich über die gesamte Länge des Balgs erstreckt und an die Rohrleitungsanschlüsse 2 und 3 angrenzt, eingebracht ist.
Ein Schritt in der Herstellung eines Kompensators besteht üblicherweise aus dem Aufweiten bzw. dem Umformen von übereinandergeschobenen Rohren. Der Begriff Aufweiten oder Umformung umfasst in diesem Zusammenhang die Herstellung einer balgcharakteristischen, gewellten Wandung, ausgehend von einem zylindrischen Bauteil. Vorliegend wird zur Herstellung des Kompensators 1 ein Zwischenrohr aus gebundenem Graphit, das die Zwischenlage 6 ausbildet, auf ein erstes Metallrohr, das die innere Metalllage 5a ausbildet, geschoben. Auf das Zwischenrohr wird anschließend ein äußeres Metallrohr geschoben, das die äußere Metalllage 5b ausbildet. Anschließend erfolgt das Aufweiten bzw. Umformen des Balgs, um die wellenförmige Form der Wandung herzustellen.

In der dargestellten Ausführungsvariante bildet die Wandung zur Kompensation von Relativbewegungen der Rohrleitungsanschlüsse 2 und 3 ausgehend von dem Leitungsinneren L eine Mehrzahl an periodisch angeordneten konvexen und konkaven Ausbuchtungen, die einen im Wesentlichen gleich großen Innendurchmesser d aufweisen. Gleichermaßen können sowohl die Form und die Anzahl der Ausbuchtungen als auch das Innendurchmesserverhältnis der Leitungselemente 2 und 3 beliebig variiert und zweckmäßig angepasst werden.

Wird der Kompensator 1 mit einer Zug-, Druck- oder Biegebelastung beaufschlagt, verformen sich die innere Lage 5a, die äußere Lage 5b sowie die eingebrachte Zwischenlage 6 entsprechend der wirkenden Kräfte. Durch die eingebrachte Zwischenlage 6 werden jedoch die auf die innere und äußere Lage wirkenden Reibkräfte signifikant reduziert.

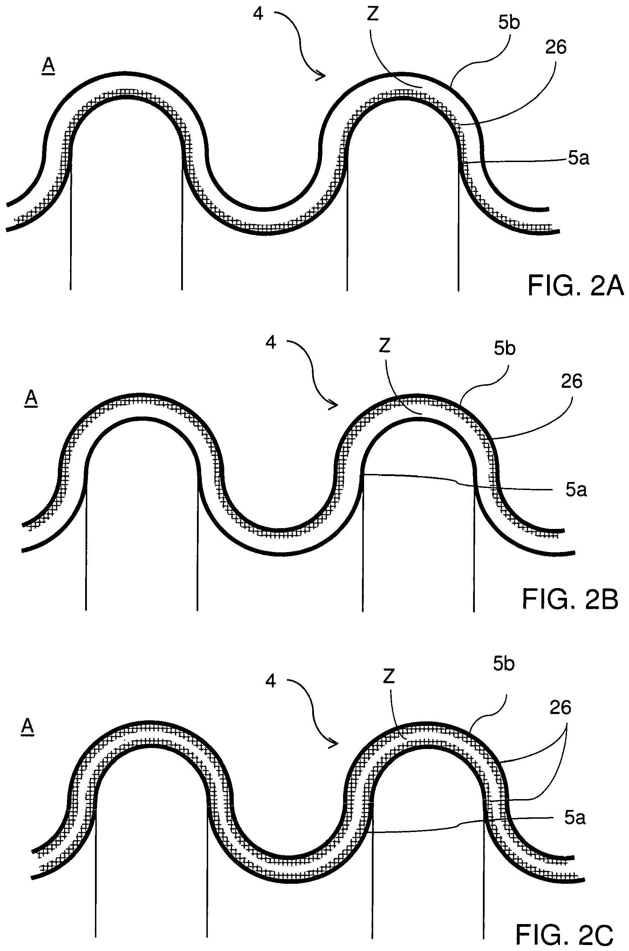

Die Figuren 2A, 2B und 2C illustrieren stark schematisiert weitere Ausführungsbeispiele und zeigen jeweils nur eine vergrößerte Detailansicht eines Kompensators, die der Detailansicht A aus Figur 1 entspricht.

Die in den Figuren 2A, 2B und 2C gezeigten Ausführungsbeispiele unterscheiden sich von dem ersten Ausführungsbeispiel dadurch, dass der Reibminderer als eine reibmindernde Beschichtung oder Lackierung 26 ausgeführt ist, die auf einer dem Zwischenraum Z zugewandten Seite zumindest einer der Lagen 5a, 5b aufgebracht ist. In den Figuren 2A, 2B und 2C ist die reibmindernde Beschichtung jeweils als ein schraffierter Bereich 26 dargestellt. Gezeigt sind drei Varianten, umfassend die Variante gezeigt in Figur 2A, wonach die reibmindernde Beschichtung 26 auf der inneren Lage 5a des Balgs 4 aufgebracht ist, die Variante gezeigt in Figur 2B, wonach die reibmindernde Beschichtung 26 auf der äußeren Lage 5b des Balgs 4 aufgebracht ist, und die Variante gezeigt in Figur 2C, wonach die reibmindernde Beschichtung 26 auf der inneren und der äußeren Lage 5a und 5b des Balgs 4 aufgebracht ist.

Es wird betont, dass es sich bei der Darstellung der Figuren 2A, 2B und 2C um eine stark schematisierte und nicht maßstabsgetreue Darstellung handelt. Durch die Umformung des Balgs 4 zu einen wellenförmigen Bauteil wird der Zwischenraum Z sehr klein bzw. ist partiell nicht mehr vorhanden, so dass sich die Lagen 5a, 5b bereits im Neuzustand über die reibmindernde Beschichtung 26 kontaktieren können.

Die reibmindernde Beschichtung bzw. Lackierung 26 bewirkt, dass die Reibung zwischen den Lagen verringert ist, d. h., die Reibung zwischen den Lagen ist ohne Beschichtung größer als mit Beschichtung. Die Beschichtung 26 ist eine Beschichtung auf Festschmierstoffbasis und besteht aus MoS2. Das Aufbringen einer Beschichtung und/oder Lackierung, die auf zumindest einer der beiden an den jeweiligen Zwischenraum Z angrenzenden Lagen 5a und 5b an ihrer dem Zwischenraum Z zugewandten Seite aufgebracht ist, erfolgt vorzugsweise vor dem Zusammenbau des Balgs, d. h. vor dem Übereinanderschieben und Aufweiten der Metallrohre, die die Lagen 5a und 5b ausbilden. Denkbar ist jedoch auch ein Beschichtungsvorgang nach Erfolgen der Montage.
Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- A: Ausschnitt
- d: Innendurchmesser
- L: Leitungsinnere
- Z: Zwischenraum
- 1: Kompensator
- 2: Erstes Leitungselement
- 3: Zweites Leitungselement
- 4: Balg
- 5a: Innere Lage des Balgs
- 5b: Äußere Lage des Balgs
- 6: Reibmindernde Zwischenlage
- 26: Reibmindernde Beschichtung

## Patentansprüche

1. Kompensator (1) zum Kompensieren von Relativbewegungen zweier Leitungselemente (2, 3) zueinander, insbesondere als flexibles Leitungselement für Kfz-Anwendungen, umfassend einen mehrlagigen Balg (4), der als Wandung mindestens zwei aufeinander sitzende Lagen (5a, 5b) umfasst, zwischen denen jeweils ein Zwischenraum gebildet (Z) ist, wobei in mindestens einem Zwischenraum (Z) ein Reibminderer (6; 26) vorhanden ist, wobei der Reibminderer eine reibmindernde Beschichtung (26) ist, die auf zumindest einer der beiden an den jeweiligen Zwischenraum (Z) angrenzenden Lagen (5a, 5b) an ihrer dem Zwischenraum (Z) zugewandten Seite aufgebracht ist, wobei die reibmindernde Beschichtung (26) eine Beschichtung auf Festschmierstoffbasis ist, **dadurch gekennzeichnet, dass** die Beschichtung auf Festschmierstoffbasis eine Molybdän(IV)-sulfid (MoS2)-basierte Beschichtung ist.

2. Kompensator (1) nach Anspruch 1, **dadurch gekennzeichnet, dass** die reibmindernde Beschichtung (26) ein Gleitlack ist.

3. Kompensator (1) nach einem der vorhergehenden Ansprüche, **dadurch gekennzeichnet,**
(a) **dass** eine durch eine Bewegung zweier aufeinander sitzender Lagen (5a, 5b) relativ zueinander erzeugte Reibkraft aufgrund des zwischen diese Lagen eingebrachten Reibminderers (6) verkleinert ist; und/oder
(b) **dass** der Reibminderer (6; 26) eine Oberfläche mit reibkraftreduzierenden Eigenschaften aufweist; und/oder
(c) **dass** der Reibminderer (6; 26) zumindest in Teilabschnitten des Zwischenraums (Z) angeordnet ist oder sich in Axialrichtung vorzugsweise über die gesamte Länge des Balgs (4) erstreckt.

4. Kompensator (1) nach einem der vorhergehenden Ansprüche, **dadurch gekennzeichnet,**
(a) **dass** die mindestens zwei aufeinander sitzenden Lagen (5a, 5b) jeweils Metalllagen sind; und/oder
(b) **dass** der Kompensator (1) ein Abgaskompensator und/oder Metallkompensator ist; und/oder
(c) **dass** die Wandung des Balgs (4) zumindest teilweise wellenförmig ausgebildet ist.

5. Kraftfahrzeug, insbesondere Nutzfahrzeug, aufweisend einen in einer Abgasleitung angeordneten Kompensator (1) nach einem der vorhergehenden Ansprüche.

## Claims

1. Compensator (1) for compensating relative movements of two line elements (2, 3) with respect to one another, in particular as a flexible line element for car applications, comprising a multi-layer bellows (4) which comprises, as a wall, at least two layers (5a, 5b) which sit on top of one another and between which in each case a space (Z) is formed, wherein a friction reducer (6; 26) is present in at least one space (Z), wherein the friction reducer is a friction-reducing coating (26) which is applied on at least one of the two layers (5a, 5b) adjoining the respective space (Z) at its side facing towards the space (Z), wherein the friction-reducing coating (26) is a solid lubricant-based coating, **characterized in that** the solid lubricant-based coating is a molybdenum(IV)-sulfide (MoS2)-based coating.

2. Compensator (1) according to Claim 1, **characterized in that** the friction-reducing coating (26) is an anti-friction varnish.

3. Compensator (1) according to either one of the preceding claims, **characterized in**
(a) **that** a frictional force generated by a movement of two layers (5a, 5b) sitting on top of one another relative to one another is reduced as a result of the friction reducer (6) incorporated between these layers; and/or
(b) **that** the friction reducer (6; 26) has a surface with frictional force-reducing properties; and/or
(c) **that** the friction reducer (6; 26) is arranged at least in sub-portions of the intermediate space (Z) or extends in the axial direction preferably over the entire length of the bellows (4).

4. Compensator (1) according to any one of the preceding claims, **characterized in**
(a) **that** the at least two layers (5a, 5b) sitting on top of one another are in each case metal layers; and/or
(b) **that** the compensator (1) is an exhaust gas compensator and/or metal compensator; and/or
(c) **that** the wall of the bellow (4) is formed to be at least partially wave-shaped.

5. Motor vehicle, in particular commercial vehicle, having a compensator (1) arranged in an exhaust gas line according to any one of the preceding claims.

## Revendications

1. Compensateur (1) pour compenser des mouvements relatifs entre deux éléments de guidage (2, 3), en particulier sous forme d'élément de guidage flexible pour des applications automobiles, comprenant un soufflet multicouches (4) qui comprend, en tant que paroi, au moins deux couches (5a, 5b) superposées, entre lesquelles est à chaque fois formé (Z) un espace intermédiaire, un réducteur de friction (6 ; 26) étant prévu dans au moins un espace intermédiaire (Z), le réducteur de friction étant un revêtement réducteur de friction (26) qui est appliqué sur au moins l'une des deux couches (5a, 5b) adjacentes à l'espace intermédiaire respectif (Z) au niveau de son côté tourné vers l'espace intermédiaire (Z), le revêtement réducteur de friction (26) étant un revêtement à base de lubrifiant solide, **caractérisé en ce que** le revêtement à base de lubrifiant solide est un revêtement à base de sulfure de molybdène (IV) (MoS2).

2. Compensateur (1) selon la revendication 1, **caractérisé en ce que** le revêtement réducteur de friction (26) est un vernis antifriction.

3. Compensateur (1) selon l'une quelconque des revendications précédentes, **caractérisé en ce**
(a) **qu'**une force de friction produite par un déplacement de deux couches superposées (5a, 5b) l'une par rapport à l'autre est réduite par le biais du réducteur de friction (6) introduit entre ces couches ; et/ou
(b) **que** le réducteur de friction (6 ; 26) présente une surface ayant des propriétés de réduction de la force de friction ; et/ou
(c) **que** le réducteur de friction (6 ; 26) est disposé au moins dans des portions partielles de l'espace intermédiaire (Z) ou s'étend dans la direction axiale de préférence sur toute la longueur du soufflet (4).

4. Compensateur (1) selon l'une quelconque des revendications précédentes, **caractérisé en ce**
(a) **que** les au moins deux couches superposées (5a, 5b) sont à chaque fois des couches métalliques ; et/ou
(b) **que** le compensateur (1) est un compensateur à gaz d'échappement et/ou un compensateur métallique ; et/ou
(c) **que** la paroi du soufflet (4) est réalisée au moins en partie sous forme ondulée.

5. Véhicule automobile, en particulier véhicule utilitaire, présentant un compensateur (1) selon l'une quelconque des revendications précédentes, disposé dans un conduit de gaz d'échappement.
